# EUROPEAN PATENT SPECIFICATION

(11) **EP 2 767 037 B1**
(45) Date of publication and mention of the grant of the patent: **03.02.2016**
(21) Application number: 11796640.8
(22) Date of filing: 23.11.2011
(51) Int. Cl.: H04L 12/26

(54) **A METHOD TO MINIMIZE POST-PROCESSING OF NETWORK TRAFFIC**
VERFAHREN ZUR MINIMIERUNG VON NACHBEARBEITUNGEN EINES NETZWERKVERKEHRS
PROCÉDÉ POUR MINIMISER LE POST-TRAITEMENT D'UN TRAFIC DE RÉSEAU

(30) Priority: 28.09.2011 US 201161540228 P
(43) Date of publication of application: 20.08.2014
(73) Proprietor: Telefonica S.A., 28013 Madrid (ES)
(72) Inventor: MAESO MARTÍN-CARNERERO, Adrian, E-28010 Madrid (ES); GARCÍA DE BLAS, Gerardo, E-28035 Madrid (ES); RAMÓN SALGUERO, Francisco Javier, E-28028 Madrid (ES); MONTES MORENO, Pablo, E-28043 Madrid (ES)
(74) Representative: Carlos Hernando, Borja
(86) International application number: PCT/EP2011/070875
(87) International publication number: WO 2013/044996

(56) References cited:
- EP-A1- 2 262 173
- EP-A2- 1 054 529
- WO-A2-2011/051750
- US-A1- 2009 190 473

## Description

### Field of the art

The present invention generally relates, to a method to minimize post-processing of network traffic, said network traffic monitored by means of descriptive metadata, said descriptive metadata outputted by a Descriptive Metadata Interface of a Deep Packet Inspection deployment of a network, said descriptive containing verbatim packets fields and accounting information, and more particularly to a method that comprises correlating at least part of said descriptive metadata with information included in said descriptive metadata, centralized signatures and external data sources in order to enrich said descriptive metadata.

### Prior State of the Art

Network monitoring has become an important task in modern networks. It allows maintaining the network system stability, availability and security and allows making good decisions for capacity and network planning.

By studying traffic behavior in different moments it is possible to infer patterns in traffic growth allowing the creation of predictive models. In order to be precise, these models must not only be based on the amount of traffic transferred, but they must consider the different protocols and types of traffic present in the network and how they can be affected by changes in the network or by service providers. E.g. if a video content provider increased the bitrate of its videos, the same quantity of video requests would produce a bigger amount of traffic.

Some commercial products such as Sandvine, iPoque or Cisco SCE provide a solution based on DPI analysis and the detection of packets patterns. These systems inspect the packets traversing a link and classify each packet as belonging to a specific kind of application or classified as unknown. This information is used to provide traffic reports that are the final output of the system. It is important to notice that any traffic that is not correctly classified will remain in that classification since traffic reports do not provide enough information to apply other analysis to them. An alternative to these monitoring systems is the method described in patent application WO 2011/051750 of monitoring network traffic by means of descriptive metadata. This method is able to provide a reduced traffic capture that can be post-processed in a later stage, decoupling in this way the traffic capture from the analysis and increasing greatly flexibility at the time that the number of updates in the capturing system is minimized.

A solution for network or traffic management is described in EP 2262173 which describes a method for managing a network in order to control or influence traffic flows using a-priory knowledge on sources of traffic and applications or services delivered over the network.

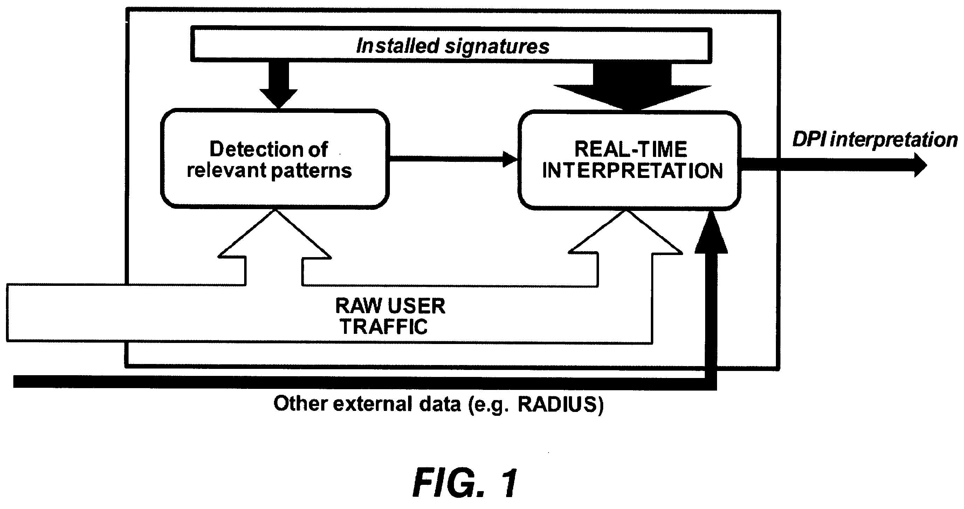

Most traffic monitoring solutions perform traffic analysis using a monolithic system approach by comparing the single packets or the streams of traffic with stored traffic patterns and combining the obtained information with external data sources. These two types of information are processed in the same system that captured traffic producing an interpretation of what was observed in the network, as it will be shown in Figure 1.

The method of monitoring network traffic by means of descriptive metadata introduced an alternative to the general DPI procedure, splitting the DPI system in two: traffic detection and post-processing.

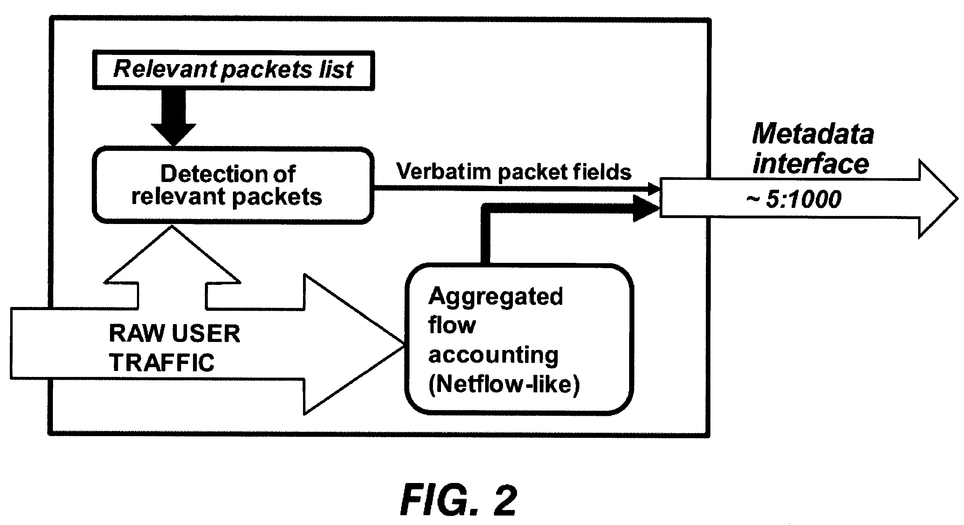

The traffic detection component in this alternative model of DPI consists on the detection of relevant packets and the extraction from them of key fields. For example, a relevant packet could be an HTTP request and one of its key fields the host name. The outcome of the traffic detection is a stream of verbatim packets fields, which from now on it will referred as metadata. Adding this data to an aggregated flow accounting forms the Descriptive Metadata Interface, as it will be shown in Figure 2.

The Descriptive Metadata Interface provides a description of all the traffic observed in the network. This traffic description, general enough to allow the detection of signatures on it, can be post processed out of the DPI box to generate traffic reports. In this way the outcome of the Descriptive Metadata Interface, due to its reduced size, can be stored and processed offline.

Offline processing implies a great gain in terms of traffic analysis. Since the descriptive metadata interface provides a summary of the traffic including key fields of packets (metadata), it is possible to use signatures to detect new types of traffic. In this way, the outcome of the Descriptive Metadata Interface can be used several months later with new analysis, for example to check if a newly popular type of traffic was present at the capture time.

The capture post-processing uses two sources of information in order to process the captures: the installed signatures and external sources of data, e.g. RADIUS data.

Signatures for post-processing are not static, on occasions they need to be updated. This is necessary when a protocol changes or if the detection of a new type of traffic wants to be included.

External sources of data are often modified, for example, files matching IP ranges to their geographical location can be updated, e.g. improving the resolution from countries to cities.

Since changes in signatures and external sources can lead to a better post-processing it is interesting to process the capture again when this occurs, being able in this way to provide more complete and accurate traffic reports.

Traditional DPI systems have several disadvantages:
They are not modular since they perform the tasks of traffic classification and traffic accounting in single equipment.

The information about the traffic classification cannot be exported for further analysis. There are exporting formats for traffic accounting (e.g. Netflow performs accounting of bytes per flow), but there are no ways to export the decisions about traffic classification. Once a packet is classified, the packet is deleted and no information about this classification is exported. This has several drawbacks:
It is not possible to reclassify the packets further again. If some packets are classified as unknown, these packets cannot be reclassified into other category, even if the methods to identify traffic improve.

Besides, the equipment needs to be updated in order to keep the signatures updated, which allows classifying the traffic in the right category. Since the information about the traffic classification is not exported and reclassification is not possible, this forces the equipment to be updated frequently.

Monitoring network traffic by means of descriptive metadata solves the mentioned drawbacks, but does not address how to efficiently analyse the outcome of this monitoring method.

The main inconvenience of traditional DPI systems is their limited flexibility to perform new types of traffic analysis. This is mainly due to the fact that these devices work as a monolithic system, generating directly as outcome the information that would be included in a traffic report, and therefore if a new type of analysis is required the whole system must be modified.

The method of monitoring network traffic by means of descriptive metadata allows separating the traffic capture from the traffic processing, increasing in this way the system flexibility. Basically this method allows saving a small sized capture of the traffic, including key pieces of information, which is post-processed separately. This separation between capture and analysis increases significantly the system flexibility, since changes would apply to the post-processing stage and not to its acquisition.

Post-processing includes all types of operations to be done to the capture in order to obtain the data required for a traffic analysis. This can include correlation with external sources of data, correlation protocol signatures and the use of traffic heuristics among other methods. This processing to be applied to the capture is very costly in computational terms so should be optimized, but post-processing also includes the application of more simple processing that can only be done after all correlations have been done. For example, obtaining the total amount of bytes downloaded from YouTube servers in UK with a specific bitrate would require detecting the bitrate of the videos, correlating the video requests with the total amount of downloaded bytes, correlating with the geographical location and finally summing the bytes of the records that match the traffic restrictions imposed. In this example, all the heavy process is all the correlations, but the analysis is just summing bytes.

The final objective of post-processing is to be able to generate a traffic report from where can be inferred conclusions about traffic. These conclusions can be about traffic in general or about a specific protocol or application, and therefore the post processing may vary depending on the type of traffic analysis to be done.

### Description of the Invention

It is necessary to offer an alternative to the state of the art which covers the gaps found therein, particularly related to the lack of proposals which really allow defining how to analyse the outcome of a Descriptive Metadata Interface allowing the use of simple analysis tools to create traffic reports.

To that end, the present invention provides a method to minimize post-processing of network traffic, comprising correlating and processing at least part of an output composed of metadata and traffic accounting data with information included in metadata, traffic accounting data, centrally stored protocol signatures and external data sources of geographical location data related to the network traffic, said metadata and said traffic accounting data obtained from a Descriptive Metadata Interface of a Deep Packet Inspection (DPI) deployment of a network.

On contrary to the known proposals, the method of the invention, in a characteristic manner, includes an enrichment process comprising correlating and re-processing said previously correlated and processed output composed of metadata and traffic accounting data.

The invention, in a second aspect, provides a system to minimize post-processing of network traffic, comprising
- means for correlating and processing at least part of an output composed of metadata and traffic accounting data with information included in said metadata, said traffic accounting data, centrally stored protocol signatures and external data sources of geographical location data related to the network traffic;
- a Descriptive Metadata Interface to provide a summary of the traffic of a network including said metadata, and
- a storage for said centrally stored protocol signatures,

In a characteristic manner the system of the invention further comprises correlation and processing means adapted to perform an enrichment of said previously correlated and processed output composed of metadata and traffic accounting data.

Other embodiments of the method of the method of the invention are described according to appended claims, and in a subsequent section related to the detailed description of several embodiments.

### Brief Description of the Drawings

The previous and other advantages and features will be more fully understood from the following detailed description of embodiments, with reference to the attached drawings (some of which have already been described in the Prior State of the Art section), which must be considered in an illustrative and non-limiting manner, in which:
Figure 1 shows current generic Deep Packet Inspection systems.
Figure 2 shows current Deep Packet Inspection systems based on monitoring network traffic by means of descriptive metadata.
Figure 3 shows the concatenation of the DPI Metadata Enrichment System with a reports generation module which outputs traffic reports, according to an embodiment of the present invention.
Figure 4 shows the different processes to be performed over the descriptive metadata in order to enrich it, according to an embodiment of the present invention.
Figure 5 illustrates the fact that the DPI Metadata Enrichment System maintains the data format at its output, according to an embodiment of the present invention.

### Detailed Description of Several Embodiments

The DPI Metadata Enrichment System (DMES) proposed in the present invention has been created as a solution to optimize post-processing for the method of monitoring network traffic by means of descriptive metadata. This system performs the heavy post-processing actions in a manner that allows reducing the processing time and increasing flexibility.

The DPI Metadata Enrichment System (DMES) complements the technique of monitoring network traffic by means of descriptive metadata by defining how to analyse the outcome of the descriptive metadata interface and allowing the use of simple analysis tools to create traffic reports based in the DMES output.

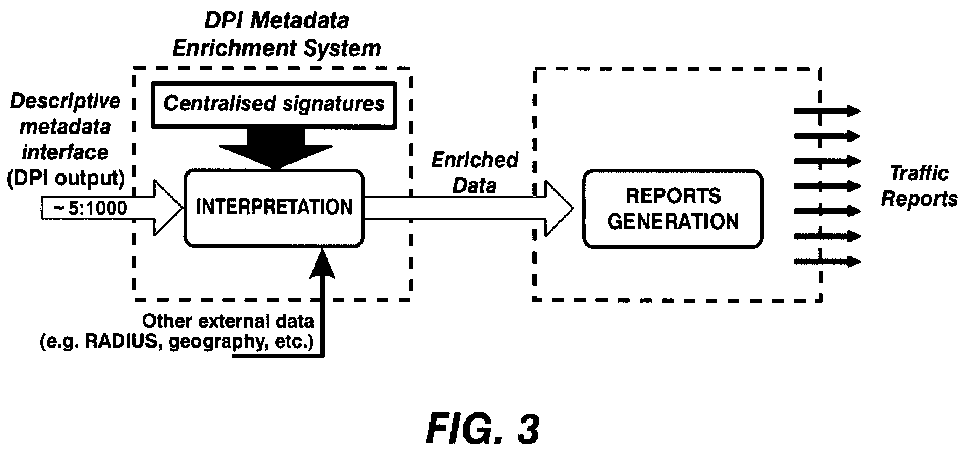

Basically, DMES processes the outcome of the Descriptive Metadata Interface; this is the interface that offers the capture of a system of monitoring network traffic by means of descriptive metadata. The capture is correlated with signatures, the own information in the capture and external sources of data, producing an enriched outcome that includes all the correlation information and that will be used in a later stage for traffic analysis, as shown in Figure 3.

The present invention consists on a system capable of minimizing the necessary efforts to process the outcome of a system following the method described in WO 2011/051750 of monitoring network traffic by means of descriptive metadata.

The key characteristic of the DPI Metadata Enrichment System is that the output data has the same format as the input data. In this way it is possible to use as input of the DMES its own data output.

The DMES is fed with data such as how to interpret metadata, geographic locations, interesting hosts, interesting IP ranges, etc. Since this data is frequently updated, it would be desirable to be able to also update the outcome of the enrichment system. This enrichment of a previously enriched data is performed in DMES just re-processing.

The DPI Metadata Enrichment System is capable of enriching data selectively. This implies that it is possible, for example, just to add geographical location to the traces or just to enrich certain applications. This capability is very useful when re-processing is necessary, since it is possible to enrich only the data affected by updates in the DMES, saving in this way processing time.

Some characteristics of the present invention are:
- The output of the DMES follows the same format of the data provided by the Descriptive Metadata Interface.
- Using the DMES allows minimizing complexity of later processing stages.
- It is possible to use the outcome of the DMES as input when re-processing is necessary.
- The DMES enriches captures using information included in the capture, centralized signatures and external data sources.
- The DMES allows to specify what types of enrichment must be applied to the captures, being possible for example only to apply one specific signature detection.
- Signatures and external sources of data for correlation change/are improved often and when this happens is convenient to re-process captures.
- When re-processing, enabling only the enrichment affected by changes in DMES implies the processing time is reduced drastically.

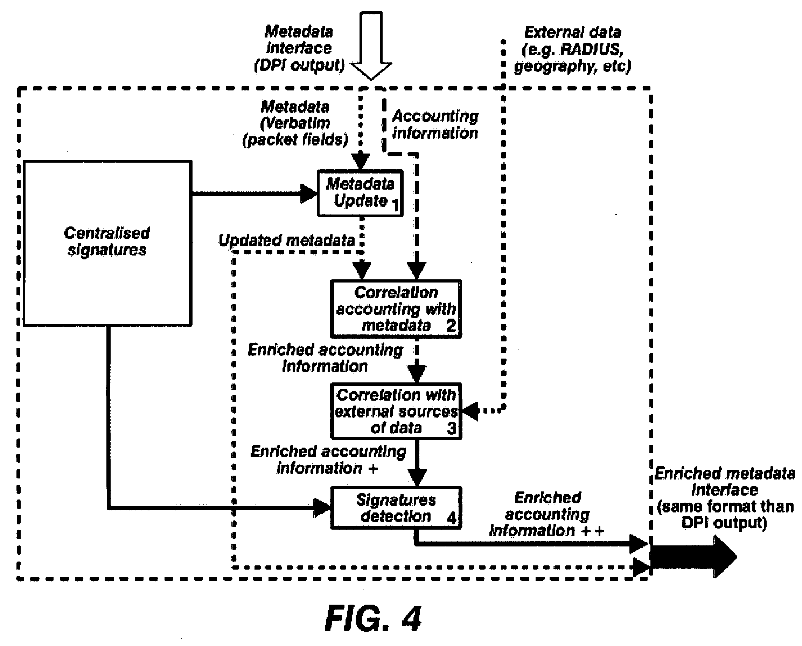

Figure 4 showed an example of a possible implementation of the invention. As observed in the figure, the information from the metadata interface goes through the system using different sources to enriching the data:
Box 1 - Metadata Update. Metadata is updated using the signatures information. E.g. a metadata message containing information of an HTTP transaction can be updated to indicate that the HTTP transaction was a download from a file hosting service.
Box 2 - Correlation of accounting with metadata. The accounting information is enriched using the information present in metadata messages. E.g. use a metadata message informing that a flow comes from a file hosting service. This allows including that information in the accounting of that flow, determining the number of bytes uploaded/downloaded to perform the file download.
Box 3 - Correlation with external sources of data. Correlation of the accounting information with additional sources of data. E.g. If the external data used to correlate is a dictionary that allows to assign IPs to geographical location this box would allow to determine where is physically placed the server of a file hosting company from where a content has been downloaded.
Box 4 - Signatures detection. Once the capture has been enriched in the previous boxes it is possible to perform additional signatures detection. E.g. heuristics usage to determine the type of traffic of unknown flows.

The possible implementation depicted in Figure 4. is only a functional scheme. Functionalities of the different modules could be grouped into single equipment or separated into different equipment.

The DMES capability of generating an enriched output, maintaining the same format as its input, is based in the definition of the format of the Descriptive Metadata Interface. This format includes field in the accounting information intended to store additional information of the flow, such as the type of traffic or the geographical location of the server, and these are the fields that the DMES fills/updates by correlating the traffic description with different data sources (signatures definitions, updated metadata and external sources of data).

Updates of the sources of information used by the DMES imply a better enrichment of the captures and therefore it is convenient to update captures re-processing them with the DMES. There are two reasons to re-process an already processed capture instead of using directly the output of the Descriptive Metadata Interface:
1. Storage reduction. Since the outcome of the DMES can be used as input of the system it is not necessary to store the original capture (outcome of the Descriptive Metadata Interface).
2. Reduction of the time required to generate the new output. Since the DMES allows enriching selectively data by deactivating the correlation with specific sources of data, it is only necessary to activate the enrichment affecting the modified data, and therefore reducing the time needed for the re-processing. E.g. if a signature that allows to reclassify FLV streaming videos is improved to indicate the content provider, the data enrichment must be applied only to the flows that were detected in previous iterations as FLV streaming videos.

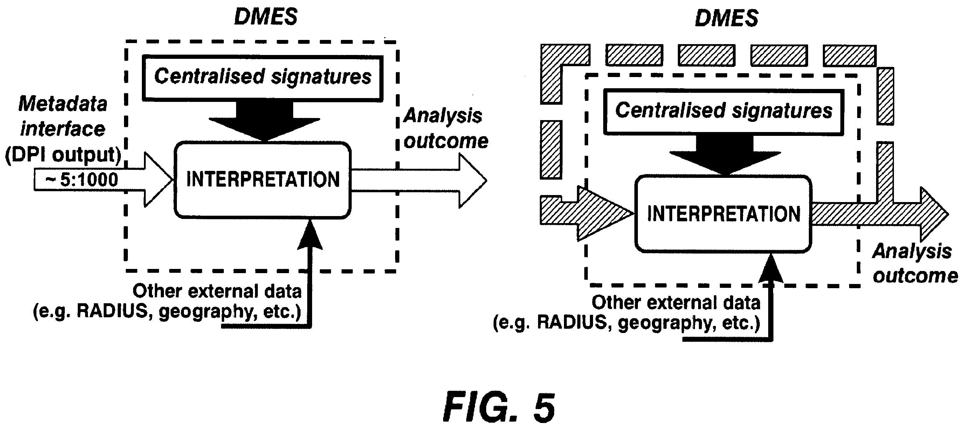

Figure 5 graphically represented the possibility of using DMES to analyse directly the outcome of the Descriptive Metadata Interface versus the possibility of analysing its own outcome. The normal usage of the DPI Metadata Enrichment System would follow these steps:
1. Process the capture of the Descriptive Metadata Interface.
2. Remove the capture of the Descriptive Metadata Interface.
3. Use the outcome of the DMES to perform analysis aimed to generate traffic reports and keep the DMES output to re-process if necessary.

As can be observed these steps do not include re-processing in the DMES. Re-processing is only performed when it is necessary to introduce changes in the data it uses to enrich captures. This is very useful to quickly determine the presence of new protocols in a capture, since the only protocols that are interesting to detect are the most significant in volume and those that are interesting from a tactical perspective.

In order to illustrate the DPI Metadata Enrichment System, some results were obtained by a particular implementation of the invention.

In this implementation all the managed information is binary data. This has been done in order to optimize performance and the necessary space disk to save outputs. Nevertheless, representing binary data would not allow illustrating the DMES so text data will be used instead.

The following tables represent the output of the Descriptive Metadata Interface:

| | | | | | | | | | |
|---|---|---|---|---|---|---|---|---|---|
| 1396673130:49569 | 3269476872:80 | TCP | 4 | 1 | 5360 | 40 | VLAN_Q 50 | 00 | 00 |
| 1394646482:50108 | 3174935809:1536 | TCP | 2 | 0 | 2680 | 0 | VLAN_Q 50 | 00 | 00 |
| 1394625343:24735 | 1396297335:48384 | UDP | 0 | 1 | 0 | 1466 | VLAN_Q 50 | 00 | 00 |
| 1343932984:55259 | 1396055224:21784 | TCP | 5 | 4 | 5748 | 160 | VLAN_Q 50 | 00 | 00 |
| 1436034701:24076 | 1361312813:3565 | TCP | 0 | 1 | 0 | 1188 | VLAN_Q 50 | 00 | 00 |
| 1395069195:12259 | 3181184896:12408 | UDP | 1 | 0 | 63 | 0 | VLAN_Q 50 | 00 | 00 |
| 1394646123:3322 | 3174935809:1536 | TCP | 3 | 0 | 156 | 0 | VLAN_Q 50 | 00 | 00 |
| 1343932535:16018 | 1592110395:80 | UDP | 1 | 0 | 129 | 0 | VLAN_Q 50 | 00 | 00 |
| 1395791963:23415 | 1114410499:51413 | UDP | 0 | 1 | 0 | 165 | VLAN_Q 50 | 00 | 00 |
| 1395069348:54768 | 3654843008:18669 | TCP | 1 | 2 | 1440 | 109 | VLAN_Q 50 | 00 | 00 |
| 1334864840:56106 | 1334904428:22938 | UDP | 0 | 1 | 0 | 1430 | VLAN_Q 50 | 00 | 00 |
| 1396672799:12612 | 1440435422:3243 | TCP | 3 | 1 | 4172 | 40 | VLAN_Q 50 | 00 | 00 |

| | | | | | | | | | |
|---|---|---|---|---|---|---|---|---|---|
| USR | 1301459263.895152 | | | 1396673130:49569 | | > | 3269476872:80 TCP | | 529 |
| | 489 | 18 | VLAN_Q 50 | | HTTP GET | 07 | GET /hprofile-ak- | | |
| | snc4/187272_1369476520_2672812_q.jpg HTTP/1.1 Mozilla/5.0 (Windows; U; Windows NT 6.0; en-US) AppleWebKit/534.16 (KHTML, like Gecko) Chrome/10.0.648.204 Safari/534.16 profile.ak.fbcdn.net | | | | | | | | |
| RED | 1301459263.895272 | | | | 1599070452:31446 | > | 1395791963:23415 | | UDP |
| | 661 | 633 | VLAN_Q 50 | | GET_PEERS_RESPONSE | | | n_peers: | 22 |
| | 1406509822:42600 | | | | 1595098503:15820 | | 1 | 306631082:27234 | |
| | 1394625343:24735 | | | | 3563778190:15738 | | | 773555601:21607 | |
| | 1476399821:14528 | | | 1414351873:17078 | | | 3654843008:18669 | | |
| | 1429675938:22124 | | | 1417290889:24633 | | 1435079862:23633 | | | |
| | 1396344029:24938 | | | | 1417452430:17941 | | 1477912353:25503 | | |
| | 1436034701:24076 | | | | 411762532:16881 | | | 3192951174:58539 | |
| USR | 1301459263.895332 | | | 1343932535:16018 | | > | 1592110395:80 TCP | | 1030 |
| | 990 | 18 | VLAN_Q 50 | | GET_HTTP | 07 | GET | | |
| | /opt/icons/icon_error_with_bg.gif HTTP/1.1 Mozilla/5.0 (Windows; U; Windows NT 5.1; en-US) AppieWebKit/534.16 (KHTML, like Gecko) Chrome/10.0.648.151 Safari/534.16 es.madbid.com | | | | | | | | |
| RED | 1301459263.895371 | | | 3174935809:1536 | | > | 1396672799:12612 | | TCP |
| | 62 | 22 | 18 | VLAN_Q 50 | EM_54 | file_hash: | | | |
| | 586DAB21FE587A7204FFA03149E73525 | | | | | | | | |

More concretely, the first table represents the accounting information for a certain number of flows. The last two columns of each row represent the type of traffic and the geographical location. As this is the capture prior going through DMES these columns have the value 00.

The second table represents the metadata information associated to the same period of the accounting information depicted in the first table. In this table the type of each packet is marked in grey:
- HTTP_GET → HTTP request
- GET_PEERS_RESPONSE → Signaling message for Bittorrent. It indicates the IP and port of other machines running this application.
- EM_54 →Signaling message of eMule.

After correlating the metadata with the internal signatures database it is possible to determine that one of the HTTP_GET messages can be re-categorized to a better type (FACEBOOK) that indicates that metadata represents a HTTP request to a Facebook server.

The following table represents the metadata at the output of the DMES:

| | | | | | | | | | |
|---|---|---|---|---|---|---|---|---|---|
| USR | 1301459263.895152 | | | 1396673130:49569 | | | 3269476872:80 TCP | | 529 |
| | 489 | 18 | VLAN_Q 50 | | FACEBOOK | 07 | GET /hprofile-ak- | | |
| Windows | snc4/187272_1369476520_2672812_q.jpg HTTP/1.1 Mozilla/5.0 (Windows; U; Windows NT 6.0; en-US) AppleWebKit/534.16 (KHTML, like Gecko) | | | | | | | | |
| | Chrome/10.0.648.204 Safari/534.16 profile.ak.fbcdn.net | | | | | | | | |
| RED | 1301459263.895272 | | | 1599070452:31446 | | | 1395791963:23415 | | UDP |
| | 661 | 633 | VLAN_Q 50 | | GET_PEERS_RESPONSE | | | n_peers: | 22 |
| | 1406509822:42600 | | | | 1595098503:15820 | | 1 | 306631082:27234 | |
| | 1394625343:24735 | | | | 3563778190:15738 | | | 773555601:21607 | |
| | 1476399821:14528 | | | | 1414351873:17078 | | 3654843008:18669 | | |
| | 1429675938:22124 | | | 1417290889:24633 | | 1435079862:23633 | | | |
| | 1396344029:24938 | | | | 1417452430:17941 | | 1477912353:25503 | | |
| | 1436034701:24076 | | | | 411762532:16881 | | | 3192951174:58539 | |
| USR | 1301459263.895332 | | | 1343932535:16018 | | | 1592110395:80 TCP | | 1030 |
| | 990 | 18 | VLAN_Q 50 | | GET_HTTP | 07 | GET | | |
| | /opt/icons/icon_error_with_bg.gif HTTP/1.1 Mozilla/5.0 (Windows; U; Windows NT 5.1; en-US) AppleWebKit/534.16 (KHTML, like Gecko) Chrome/10.0.648.151 Safari/534.16 es.madbid.com | | | | | | | | |
| RED | 1301459263.895371 | | | 3174935809:1536 | | 1396672799:12612 | | | TCP |
| | 62 | 22 | 18 | VLAN_Q 50 | | EM_54 file_hash: | | | |
| | 586DAB21 FE587A7204FFA03149E73525 | | | | | | | | |

The accounting information, when correlated with this updated metadata acquires the type of traffic each flow is. Additionally, correlating the IPs of the flows with the geographical location dictionary it is possible to determine the geographical location of the servers.

The following table represents accounting information at the output of the DMES:

| | | | | | | | | | |
|---|---|---|---|---|---|---|---|---|---|
| 1396673130:49569 | 3269476872:80 | TCP | 4 | 1 | 5360 | 40 | VLAN_Q 50 | FACEBOOK | 396 |
| 1394646482:50108 | 3174935809:1536 | TCP | 2 | 0 | 2680 | 0 | VLAN_Q 50 | EMULE | 32 |
| 1394625343:24735 | 1396297335:48384 | UDP | 0 | 1 | 0 | 1466 | VLAN_Q 50 | BITTORRENT | 396 |
| 1343932984:55259 | 1396055224:21784 | TCP | 5 | 4 | 5748 | 160 | VLAN_Q 50 | 00 | 00 |
| 1436034701:24076 | 1361312813:3565 | TCP | 0 | 1 | 0 | 1188 | VLAN_Q 50 | BITTORRENT | 396 |
| 1395069195:12259 | 3181184896:12408 | UDP | 1 | 0 | 63 | 0 | VLAN_Q 50 | 00 | 145 |
| 1394646123:3322 | 3174935809:1536 | TCP | 3 | 0 | 156 | 0 | VLAN_Q 50 | EMULE | 439 |
| 1343932535:16018 | 1592110395:80 | UDP | 1 | 0 | 129 | 0 | VLAN_Q 50 | HTTP GET | 439 |
| 1395791963:23415 | 1114410499:51413 | UDP | 0 | 1 | 0 | 165 | VLAN_Q 50 | 00 | 439 |
| 1395069348:54768 | 3654843008:18669 | TCP | 1 | 2 | 1440 | 109 | VLAN_Q 50 | BITTORRENT | 00 |
| 1334864840:56106 | 1334904428:22938 | UDP | 0 | 1 | 0 | 1430 | VLAN_Q 50 | 00 | 396 |
| 1396672799:12612 | 1440435422:3243 | TCP | 3 | 1 | 4172 | 40 | VLAN_Q 50 | EMULE | 354 |

It can be observed that the last two columns have been filled. The first of them contains the type of traffic and the second one a numeric code identifying a country. As can be observed, in this example some flows still have the 00 code for the traffic type and/or the geographical location. This means that the DMES did not have enough information to enrich all flows, so updating the signatures and re-processing would result on the total identification of the traffic. When re-processing, only the flows that were not previously enriched would be analyzed by the DMES, saving in this way processing time.

### Advantages of the invention

Main characteristics of the DPI Metadata Enrichment System are that maintains the data format, that is intended for processing heavy data correlations and that the tasks performed by the DMES can be selected prior to starting the analysis. These characteristics imply some important benefits:
- The DMES does not need to be modified when analysis changes are required. This is because the correlations are always done in the same manner, being the sources of data themselves (external data sources, metadata interpretation and signatures) the ones that change, but not the system.
- Performing the enrichment separately from the traffic analysis allows the last one to be much simpler so it can be performed using scripting languages, that are much easier to program and specifically oriented to traces processing.
- The DPI Metadata Enrichment System output has the same format as its input. This implies any analysis that could be done using directly the outcome of the Descriptive Metadata Interface can also be done to the outcome of the DMES, assuring in this way compatibility.
- That DMES maintains the data format implies that the output of the system can be used as its input for a new iteration. This implies that after processing a capture, the original capture can be deleted since, in case re-processing in the DMES is required, the previous outcome can be used, reducing in this way storage needs.
- The DMES can enrich the data selectively. This means that if re-processing is needed because the information affecting to a certain protocol or to a specific correlation has changed it is possible to apply the post-processing only to the part of the analysis that changed, saving in this way processing time.

A person skilled in the art could introduce changes and modifications in the embodiments described without departing from the scope of the invention as it is defined in the attached claims.

### ACRONYMS

- DMES: DPI Metadata Enrichment System
- DPI: Deep Packet Inspection
- FLV: FLash Video
- HTTP: HyperText Transfer Protocol

## Claims

1. A method to minimize post-processing of network traffic, comprising correlating and processing at least part of an output composed of metadata and traffic accounting data with information included in said metadata, said traffic accounting data, centrally stored protocol signatures and external data sources of geographical location data related to the network traffic, said metadata and said traffic accounting data obtained from a Descriptive Metadata Interface of a Deep Packet Inspection (DPI) deployment of a network, said method being **characterized in that** it includes an enrichment process comprising correlating and re-processing said previously correlated and processed output composed of metadata and traffic accounting data.

2. A method according to claim 1, wherein only a part of said metadata and/or a part of said traffic accounting data are provided to said enrichment process.

3. A method according to claim 1 o 2, comprising performing said re-processing only to said enriched metadata and enriched traffic accounting information affected by updates applied to said centralized protocol signatures and/or said external data sources.

4. A system to minimize post-processing of network traffic, comprising
- means for correlating and processing at least part of an output composed of metadata and traffic accounting data with information included in said metadata, said traffic accounting data, centrally stored protocol signatures and external data sources of geographical location data related to the network traffic;
- a Descriptive Metadata Interface to provide a summary of the traffic of a network including said metadata, and
- a storage for said centrally stored protocol signatures,
**characterized in that** it further comprises correlation and processing means adapted to perform an enrichment of said previously correlated and processed output composed of metadata and traffic accounting data.

## Patentansprüche

1. Verfahren, um Nachbearbeitung von Netzwerkverkehr zu minimieren, umfassend das Korrelieren und Verarbeiten mindestens eines Teils einer Ausgabe, zusammengesetzt aus Metadaten und Verkehrsabrechnungsdaten mit in den Metadaten, den Verkehrsabrechnungsdaten, zentral gespeicherten Protokollsignaturen und externen Datenquellen geographischer Standortdaten in Bezug auf den Netzwerkverkehr, enthaltenen Informationen, die Metadaten und die Verkehrsabrechnungsdaten erhalten aus einer Descriptive Metadata-Schnittstelle einer Deep Packet Inspection (DPI)-Verwendung eines Netzwerks, wobei das Verfahren **dadurch gekennzeichnet ist, dass** es einen Anreicherungsprozess einschließt, umfassend das Korrelieren und Wiederaufarbeiten der bereits korrelierten und verarbeiteten Ausgabe, die aus Metadaten und Verkehrsabrechnungsdaten zusammengesetzt ist.

2. Verfahren nach Anspruch 1, wobei nur ein Teil der Metadaten und/oder ein Teil der Verkehrsabrechnungsdaten für den Anreicherungsprozess vorgesehen ist.

3. Verfahren nach Anspruch 1 oder 2, umfassend die Durchführung der Wiederaufarbeitung nur für die angereicherten Metadaten und angereicherten Verkehrsabrechnungsinformationen, die durch Aktualisierungen, die auf die zentralisierten Protokollsignaturen und/oder die externen Datenquellen angewandt wurden, betroffen sind.

4. System, um Nachbearbeitung von Netzwerkverkehr zu minimieren, umfassend
- Mittel zum Korrelieren und Verarbeiten mindestens eines Teils einer Ausgabe, zusammengesetzt aus Metadaten und Verkehrsabrechnungsdaten mit in den Metadaten, den Verkehrsabrechnungsdaten, zentral gespeicherten Protokollsignaturen und externen Datenquellen von geographischen Standortdaten in Bezug auf den Netzwerkverkehr, enthaltenen Informationen;
- Descriptive Metadata-Schnittstelle, um eine Zusammenfassung des Netzwerkverkehrs, einschließlich der Metadaten, bereitzustellen, und
- Speicher für die zentral gespeicherten Protokollsignaturen,
**dadurch gekennzeichnet, dass** es ferner Korrelations- und Verarbeitungsmittel, die geeignet sind, um eine Anreicherung der bereits korrelierten und verarbeiteten Ausgabe, zusammengesetzt aus Metadaten und Verkehrsabrechnungsdaten, durchzuführen, umfasst.

## Revendications

1. Procédé pour minimiser le post-traitement d'un trafic de réseau, comprenant la corrélation et le traitement d'au moins une partie d'une sortie composée de métadonnées et de données de comptage de trafic avec des informations incluses dans lesdites métadonnées, lesdites données de comptage de trafic, des signatures de protocole stockées centralement et des sources de données externes de données de localisation géographique en lien avec le trafic de réseau, lesdites métadonnées et lesdites données de comptage de trafic étant obtenues à partir d'une Interface de Métadonnées Descriptives d'un déploiement d'Inspection de Paquet Profond (DPI) d'un réseau, ledit procédé étant **caractérisé en ce qu'**il inclut un processus d'enrichissement comprenant la corrélation et le retraitement de ladite sortie précédemment corrélée et traitée composée de métadonnées et de données de comptage de trafic.

2. Procédé selon la revendication 1, dans lequel uniquement une partie desdites métadonnées et/ou une partie desdites données de comptage de trafic sont fournies audit processus d'enrichissement.

3. Procédé selon la revendication 1 ou 2, comprenant la mise en oeuvre dudit retraitement uniquement auxdites métadonnées enrichies et aux informations de comptage de trafic enrichies affectées par des actualisations appliquées auxdites signatures de protocole centralisées et/ou auxdites sources de données externes.

4. Système pour minimiser le post-traitement d'un trafic de réseau, comprenant
- des moyens pour la corrélation et le traitement d'au moins une partie d'une sortie composée de métadonnées et de données de comptage de trafic avec des informations inclues dans lesdites métadonnées, lesdites données de comptage de trafic, des signatures de protocole centralement stockées et des sources de données externes de données de localisation géographique en lien avec le trafic de réseau ;
- une Interface de Métadonnées Descriptives pour fournir un résumé du trafic d'un réseau incluant lesdites métadonnées, et
- un stockage pour lesdites signatures de protocole centralement stockées,
**caractérisé en ce qu**'il comprend en outre des moyens de corrélation et de traitement aptes à mettre en oeuvre un enrichissement de ladite sortie précédemment corrélée et traitée composée de métadonnées et de données de comptage de trafic.
